# EUROPEAN PATENT SPECIFICATION

(11) **EP 2 034 730 B1**
(45) Date of publication and mention of the grant of the patent: **30.11.2011**
(21) Application number: 07017520.3
(22) Date of filing: 06.09.2007
(51) Int. Cl.: H04N 7/173, H04N 7/16

(54) **Load control for a television distribution system**
Ladungskontrolle für ein Fernsehverteilungssystem
Contrôle de charge pour système de distribution de télévision

(43) Date of publication of application: 11.03.2009
(73) Proprietor: Nokia Siemens Networks Oy, 02610 Espoo (FI)
(72) Inventor: Löbig, Norbert, 64291 Darmstadt (DE); Pichlmair, Egid, 85461 Bockhorn (DE); Prüssing, Bernd, 81477 München (DE)
(74) Representative: Bruglachner, Thomas E.

(56) References cited:
- EP-A- 1 049 031
- WO-A-2007/061955
- US-A1- 2005 120 377
- US-A1- 2005 183 120
- US-A1- 2006 218 601
- US-A1- 2006 236 358
- US-A1- 2007 201 513

## Description

### Field of invention

The present invention relates to the field of television (TV) distribution systems, and more particularly to load control in a networked personal video recorder (nPVR) system.

### Art Background

A simultaneous point-to-multipoint distribution of media content is called broadcast or multicast. In today's multicast scenarios generally several hundred television channels are offered to the end-user simultaneously. The channels are provided via satellite, terrestrial radio, via cable and/or via Internet. The television user selects a channel from all offered channels, or from a subset thereof, using an electronic program guide (EPG), digit sequence input, or by zapping. However, neither EPG nor zapping helps to start the selected program at the beginning of the program.

US2005/0183120A1 describes a media distribution technique for facilitating a more individual and a more interactive use of the multicast service. Therein, the user may receive and watch a complete program at any time after the start of the multicast of the program.

A multi-user personal video recording (PVR) media server is positioned at a television distribution network. A plurality of user equipments is coupled to the PVR-media server. The PVR-media server receives a plurality of television signals, which may be acquired from different sources. The PVR-media server includes at least a receiver and a permanent storage, e.g. a hard disk drive, for storing the television signals. The users may individually pause the watching of the television program. Various time-shift and trick-play functions as "pause", "playback at a later time", "catch-up", "instant replay", "fast forward", "rewind", and "fast rewind" may be facilitated by providing a means to the user for intelligent remote control of the individual playback process. The time-shift and trick-play functions require a user-specific program distribution, which is called unicast.

The simultaneous access of a large number of users to a multitude of pre-recorded programs may cause load and coordination problems. Live programs - such as live-shows or football matches - typically contain temporal highlights, which motivate large numbers of users to trigger a flash back at a same time. Each flash back requires a change from the resource-efficient multicast mode to the resource-intensive unicast mode. Such bursts of flash backs generally result in serious load and coordination problems.

Therefore, there may be a need for a method and for a corresponding equipment, which helps to avoid overload caused by many simultaneous accesses to flash back functionality of the users, while at the same time facilitating an efficient use of central resources and reduced requirements to local resources (in particular with respect to access bandwidth and storage capacity), and while at the same time providing a special service, as trick play functions, for a running program.

### Summary of the Invention

The discussed need may be met by the subject matter according to the independent claims. Advantageous embodiments of the present invention are described by the dependent claims.

According to a first aspect of the invention a method for distribution of media content of a television program is provided. Therein, first data of the media content is recorded on a storage medium. Second data of said media content is distributed by a first point-to-multipoint distribution and received by a first user equipment. The first user equipment sends a demand for a special service to a service control means. A load status of at least one network element is detected, e.g. by the service control means. Here, the term "network element" is understood as a network component which may have a load status, wherein the load status of the network component can be determined directly, or at least indirectly. In dependence on the detected load status, the service control means executes a load control action appropriate for changing the load in the at least one network element. The at least one network element is employed for providing the special service. In a preferred embodiment the demand for the special service takes place when the first point-to-multipoint distribution is still in progress. Generally, the second data increases as long as a broadcast or point-to-point distribution of a program is running. In a further embodiment the demand takes place after or even before the first point-to-multipoint distribution takes place. The invention may also be employed in an application where the first point-to-multipoint distribution is performed as a quick flash-like high-speed download of a media content file.

The invention is based on the idea that a distribution or limitation of traffic at an actual bottleneck in the distribution system may facilitate an optimization of a routing and a scheduling of unicast and multicast streams. Thus, an overall throughput for the special service may be increased.

In the following there will be described exemplary embodiments of the present invention with reference to a method for a load control within a television distribution system. It has to be pointed out that of course any combination of features relating to different subject matters is also possible. In a preferred embodiment the second data is completely or at least partially different to the first data.

In a further preferred embodiment the demand includes at least one of a pointer to the television program and of a pointer to the first point-to-multipoint distribution of the second data of the media content.

In a further preferred embodiment the load control action is performed in dependence on an actual or forecasted load impact, wherein the load impact is caused by a provision of the special service for a second user equipment.

In a further preferred embodiment the load control action for changing the load status of the at least one network element comprises a generation of a load control message and a transmission of the load control message from the service control means to the first user equipment, wherein the load control message causes the first user equipment to output, in particular to display, a service offering information to a first user.

In a further preferred embodiment the load control action for changing the load status of the at least one network element comprises a generation of a load control message and a transmission of the load control message from the service control means to the first user equipment, wherein the load control message causes the first user equipment to output, in particular to display, a service revocation information to a first user.

In a further preferred embodiment the service offering respectively revocation information is displayed for visual reception by the first user.

The load control action for changing the load status of the at least one network element may comprise an output of price information at the first user equipment.

In a further preferred embodiment the generation of the load control message includes a determination of an increased price level at a high load status and a determination of a reduced price level at a low load status.

In a further preferred embodiment the price levels are determined user-specifically.

In a further preferred embodiment the special service comprises a time-shift function.

In a further preferred embodiment the special service is at least one of a trick-play function, a pause function, a playback-at-a-later-time function, a catch-up function, an instant-replay function, a fast-forward function, a rewind function, and a fast-rewind function. If a user has missed the beginning of a program he may use the catch-up function. With the catch-up function the video is displayed with a higher speed than normal speed, for example with double speed. The purpose is to make up time until the playback reaches the scene which is currently presented on the multicast channel. Then, in a further advanced embodiment, the unicast channel is released, and the subscriber equipment may switch back to the multicast channel. In a further embodiment, to keep the audio output understandable, the audio channel is presented at normal speed during catch-up time even. That is when the video output is displayed with higher speed than normal speed. Then, the missing time for audio presentation may at least partially be gained by abbreviation of such audio pauses, which do not contain important audio information. At times, when this method does not provide sufficient alignment then - in a further advanced embodiment - the audio information will be only presented to the customer as far as the audio information remains almost synchronous to the displaying of the video information. Then, all other portions of the audio information will not be output, but cut off until a new piece of audio information can be presented almost synchronously to the user.

In a further preferred embodiment the special service is a storage and accessibility of media content or parts thereof as personal video recorder item.

In a further preferred embodiment only those demands for the special service are served which result in a time shift that starts at the beginning of the media content. Thereby, a number of unicast streams is limited.

In a further preferred embodiment one multicast serves a number of demands for the special service, in order to limit a number of unicast streams.

In a further preferred embodiment a waiting period is employed for collecting the demands.

In a further preferred embodiment each user equipment of a plurality of first user equipments transmits a demand for the special service during a waiting period, wherein all these demands transmitted during the waiting period are answered by one single provision of the special service. A number of similar special service requests (for example within a geographical region or domain) will be answered with a modified special service. For instance a number of users demanding the special service of jumping back by 10 seconds, and restarting the program from that time, and generating this request in the time interval [t1, t2] will get the replay started at time t1 - 10 s, and will be serviced by multicast.

Prior art television distribution systems deny a portion of special service requests if the number of requests to be served increases over at certain capacity level. Therefore there may be a need to increase the capacity level without substantially adding any additional hardware to the system. This object is solved by a further preferred embodiment, wherein a distribution of the recording is controlled in dependence on the load status of the at least one network element. The distribution of the recording may be optimized in dependence on an availability of the at least one network element or in dependence on a load on the at least one network element. This feature is based on the idea that the routing and scheduling of a subset of the unicast streams may have a strong impact on the remaining choices for the routing and scheduling of other unicast streams. Because of this mutual influencing between the routing and scheduling of different unicast streams, an optimization of the distribution of the recording may lead to a higher overall throughput, and consequently, to a higher cost-efficiency, of the system, without substantially adding additional hardware to the system. For a better understanding following example is given: For storing the recordings (see first step of the inventive method), a distributed system of storage media may be employed. Then, for each specific recording a specific storage medium has to be selected from the set of all storage media of the distributed system. This may be done in advance, i.e. statically, or may be done dynamically, for example in dependence on a load status of a network element. In a preferred embodiment, that storage medium is selected which - of all available storage media - provides the best connection to the access network. In a further preferred embodiment that storage medium is considered as providing the best connection to the access network which has the highest bandwidth to that service area which - for the specific recording to be performed - probably produces the highest number of demands for the special service.

In a further preferred embodiment a user-specific provision of the special service to a second user equipment is employed for the provision of the special service to the first user equipment. With prior art television distribution systems a long-term storing of the television programs is cost-intensive, because a fulfilling of all individual special service requests requires large processing and storage capacities. Therefore there may be a need to improve the cost-efficiency of such a system with respect to costs. This object is solved by a further preferred embodiment, wherein the recording is performed at a second user equipment selected in dependence on the load status of the at least one network element. The location of the decentralized recording may be determined in dependence on availability of a system component or in dependence on a load on at least one network element. This feature is based on the idea that recordings which are of a remaining interest to a large number of users shall not only be provided at a central server, due to cost efficiency, whereas recordings which are of interest to only a small number of users cannot be provided cost-efficiently at the central server. Advanced set top boxes comprise significant storage space for storing recordings for one single user. Recordings stored in an advanced set top box of a second user may be cost-efficiently made available for the first user, if a sufficient large bandwidth for uploads from the set top box to the network can be provided. As well sufficient bandwidth for generation of recordings by streaming or download to the set top box of the second user is assumed. This embodiment is advantageous for home networking with several users. All or some functions of the coordinating unit (BE) may also be distributed to the user equipments.

In a further preferred embodiment a user-specific provision of the special service to a second user equipment is employed for the provision of the special service to the first user equipment.

According to a further aspect a service control means comprises a controller for the load control according to one of above embodiments.

In a further preferred embodiment the service control means assesses a predefined usage of the distribution service as a demand or as a revocation of the demand of the special service. This solution is based on the idea that user actions, even if not explicitly addressing the special service, may contain information about whether and to which extent a future use of the special service with respect to a specific television program may be expected. Taking this information into account, an unexpected unavailability of the special service - caused by a stop of the processing of a special service demand for another user - can be avoided.

According to a further aspect a user equipment is designed for generating and submitting the demand for the special service according to one of the above embodiments.

According to a further aspect a means for bandwidth management is designed to acquire knowledge about the load status of the at least one network element, and to influence the load status at the at least one network.

In a further preferred embodiment the influencing of the load status of the at least one network element is performed by providing load information to a service control means as described above.

In a further preferred embodiment the influencing of the load status of the at least one network element is performed by providing information to a user equipment as described above.

In a further preferred embodiment the influencing of the at least one network element is performed by providing information to the at least one network element.

In a further preferred embodiment the means for bandwidth management is included in the service control means as described above.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 illustrates the message and payload flow according to the first aspect of the invention.
Fig. 2 illustrates the message and payload flow according to a further scenario of the invention.
Fig. 3 illustrates the message and payload flow according to a further scenario of the invention.
Fig. 4 illustrates the method steps according to the first aspect of the invention.
Fig. 5 and 6 illustrate the coordination of partially central nPVR servers for time shift television or lately started recordings.
Fig. 7 illustrates the arrangement of a resource manager for assisting the coordination of the nPVR servers for time shift television or lately started recordings.
Fig. 8 shows a screen shot of an EPG menu which allows an nPVR backward recording.
Fig. 9 shows a screen shot with offering information about the new zapping features, wherein the offering information is displayed in the info banner of a running program.
Fig. 10 shows a screen shot with offering information about the new zapping features, wherein the offering information is displayed in the television full screen mode.
Fig. 11 shows a screen shot with offering information about the option "backward recording", if an end-user wants to start the recording of a running program and if the program is already being recorded.
Fig. 12 illustrates how the recording of a complete television channel may be organized in case of missing program begin/end signaling.
Fig. 13 illustrates how the deletion of the content of a program is organized.
Fig. 14 illustrates the multicast distribution of nPVR recordings.
Fig. 15 shows a typical time diagram on backward recording in case of recording of a complete channel.
Fig. 16 shows the network architecture including an encryption server.
Fig. 17 shows the basic structure of a resource management system for an IPTV solution.

### Detailed Description

The illustration in the drawings is schematically. It is noted that in different figures, similar or identical elements are provided with the same reference signs or with reference signs, which are different from the corresponding reference signs only with respect to the first digit.

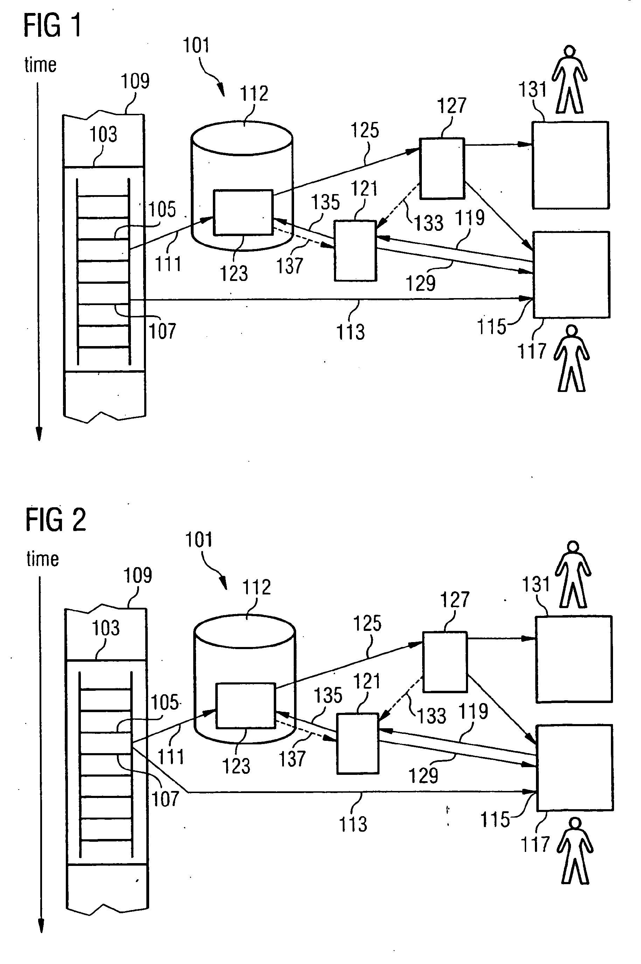

Fig. 1 illustrates the message and payload flow according to the first aspect of the invention in a scenario where the second data of the media content is succeeding the first data of said media content.

Fig. 2 illustrates the message and payload flow according to the first aspect of the invention in a scenario where the second data of the media content is identical to the first data of said media content.

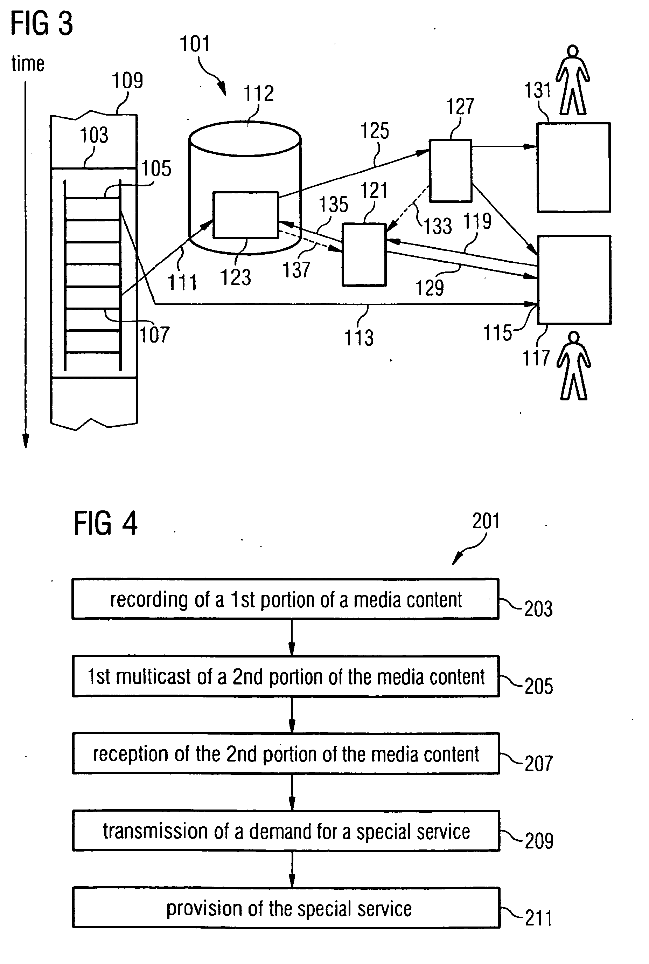

Fig. 3 illustrates the message and payload flow according to the first aspect of the invention in a scenario where the second data of the media content is preceding the first data of said media content.

Fig. 4 illustrates the method steps 203, 205, 207, 209, 211 according to the first aspect of the invention.

The television distribution system 101 supports a special service for recording and playing back of portions of media content 103. The special service may be a time-shift or a trick-play function as pause, playback at a later time, catch-up, instant replay, forward, fast forward, rewind, and fast rewind. The media content 103 comprises a first 105 and a second 107 portion of a television program 109.

In a preferred embodiment the demand for the special service takes place when the first point-to-multipoint distribution 113 is still in progress, and the second data 107 increases as long as a broadcast 113 of a program is running. In a further embodiment the demand takes place after or even before the first point-to-multipoint distribution 113 takes place. The invention may also be employed in an application where the first point-to-multipoint distribution 113 is performed as a quick flash-like high-speed download of a video file.

The method 201 is performed in following steps: A first step 203 of the method 201 is a recording 111 of the first data 105 of the media content 103 on a storage medium 112. A second step 205 of the method 201 is a first point-to-multipoint distribution (multicast) 113 of the second data 107 of the media content 103. A third step 207 of the method 201 is a reception 115 of the second data 107 of the media content 103 using a first user equipment 117. A fourth step 209 of the method 201 is a transmission of a demand 119 for the special service from the first user equipment 117 to a service control means 121, wherein the demand 119 typically includes at least implicitly one of a pointer to the media content 103 and a pointer to the first point-to-multipoint distribution 113.

For performing the special service for the first user equipment 117 the service control means 121 needs information about which user equipment 117 has submitted the demand 119, which one of special services shall be performed, and on which one of available media contents 103 the special service shall be applied. This information may be included in message fields of the demand 119. In an alternative embodiment the service control means 121 receives knowledge about this information by a data communication being different to the demand 119. An explicit addressing may be employed, for example, if the service control means 121 is designed to provide for all user equipments 117 only one same kind of special service and for only one media content 103 at a time. In such a case, explicit information about which one of special services shall be performed, and on which one of available media contents 103 the special service shall be applied, is dispensable. Nevertheless, the demand 119 must include at least implicitly one of such a pointer to the media content 103 and a pointer to the first point-to-multipoint distribution 113.

A fifth step 211 of the method 201 is an execution of the special service, wherein the execution may be coordinated by the service control means 121. An execution of the special service comprises at least one of a transmission 125 of a portion of the recorded first data 123 of the media content 103 to the first user equipment 117, of a setting of a user-specific start marker, and of a setting of a user-specific stop marker. The transmission 125 of the media content 103 to the first user equipment 117 may employ a unicast or a multicast.

The method is characterized in that for load control a load control action is performed in dependence on a load of at least one network element 127. The at least one network element 127 is employable for the special service, in dependence on a load status 133 of the at least one network element 127. The load control action comprises at least one of following actions: assigning a resource to a special service (which temporarily requires more resources than already being assigned to it), assigning of traffic to a resource, enabling of a resource, limiting of traffic on a resource, bundling/concentrating of traffic onto a resource, and temporarily closing down a special service for all or a subset of users.

For example, a high traffic may temporarily occur in a cable or in a Digital Subscriber Line Access Multiplexer (DSLAM) 127 serving a residential area, because too many users within this area are currently using a time-shift service. Generally, a time shift service causes the occupation of one unicast channel per user. Each further user ordering a time shift service needs a further unicast channel. Finally, it may happen that there is no spare multiplexer-capacity left, respectively that there is no spare cable-capacity left for performing any new service order.

The load control may observe the load status in the network permanently and thus recognize such a critical load situation on the cable or on the DSLAM 127, respectively. Then the load control may take an appropriate action to reduce the load on the cable or on the DSLAM 127, respectively. For example, the load control may inhibit those new unicast transmissions 125 which have to be routed via the overloaded cable, respectively which have to be routed via the overloaded DSLAM 127.

Where appropriate, the load control may even be configured to forcibly stop an ongoing unicast transmission 125. This may be, for example, reasonable if a non-served multicast transmission having a high priority cannot be served otherwise. This measure may be considered as a temporarily closing down of the special service which requires unicast transmission. When the traffic load is reducing again, the load control may re-enable the resource respectively special service.

Further, the load control may cause the service control means to set a limitation of the number of simultaneously performed unicast transmissions via a load-critical network element.

If via the same network element 127 a number of unicast transmissions are performed or shall be performed carrying a same or almost a same content with a same or almost a same time shift this unicast traffic may be rearranged or assigned to a single multicast channel. Then, for the traffic a single multicast channel is employed instead of a plurality of unicast channels. Such a traffic rearrangement respectively such traffic assignment may be considered as a bundling or concentrating of traffic.

In addition or alternatively, the load control action may comprise an output of price information at the first user equipment 117. The service control means 121 coordinates an assignment 135 of the recording demands 119 of the users to recording units taking into account an accessibility of the users and an availability of resources 127. In particular, the criteria of a sufficiently-likely accessibility of the user to a storage medium 112 and of a network load resulting thereof are considered. Further criteria are the available bandwidth and the storage capacity (notification 137).

Fig. 2 shows a case where the demand 119 and the performing of the special service is related to the same data 107 of the media content 103 as being currently distributed by the first point-to-multipoint distribution 113.

Fig. 3 shows a case where the demand 119 and the performing of the special service is related to such data of the media content 103 which at the time of the first point-to-multipoint distribution has not been stored at all, but which is planned to be stored in the future. This embodiment may be employed, for example, in a booking scenario for the special service, wherein trailers of bookable recordings are distributed via the first point-to-multipoint distribution.

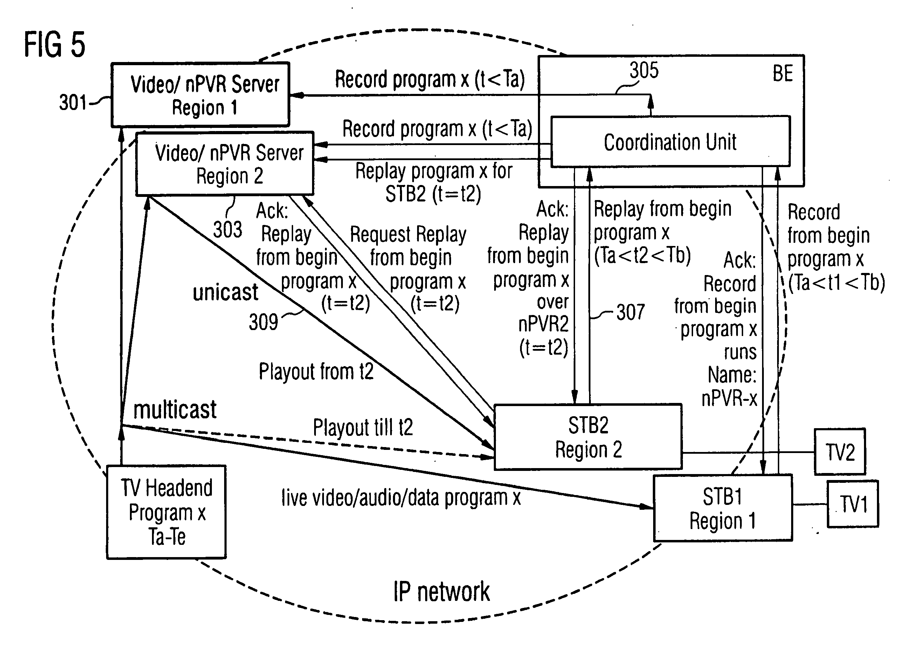

Fig. 5 illustrates the coordination of partially central nPVR servers 301, 303 for time shift television or lately started recordings. The coordinating entity (BE) has initiated 305 a recording of a program x because of a pre-configuration by an operator or because of at least one user demand. During distribution of program x, a user with Set Top Box 1 (STB1) conceives a desire to have his network personal video recorder (nPVR) to record program x such that it appears in his nPVR item list and will be available for the user with Set Top Box 1 (STB1) also after the recording of program x has ended, till it will be deleted. The recording shall be performed such that the user may watch - immediately or at a later time - the still running recording from the beginning of program x. This is possible, as the usual trick play features are made available to the user.

After program x has begun to be output, the user at the STB1 may start ad-hoc a late complete recording. The user may also start the complete recording from the EPG without watching program x. A special benefit that the user at the STB1 has is the ability to decide about the recording during the output of program x. He needs not make the decision in advance without having any knowledge about the content of program x. This allows to record only programs which the user really likes to watch for a second time.

After the start of program x a user at the STB2 joins the first point-to-multipoint distribution of program x. Then he may want to flash back to the beginning of program x or to another point of time in program x which is before the actual time. The service control means BE can fulfill this request 307 by individually outputting 309 program x for STB2 beginning with the specified time. Contrary to the user at STB1, the user at STB2 does not necessarily want to have a permanent access to program x after its end. For the user it is beneficial, that he may extend the previous channel-spanning one-dimensional zapping into the backward time of each channel. Thus, the zapping is extended into a second dimension without requiring additional local resources for this feature. If a user detects a program x he is interested in, he may zap back into a virtual past, in particular to the begin of program x.

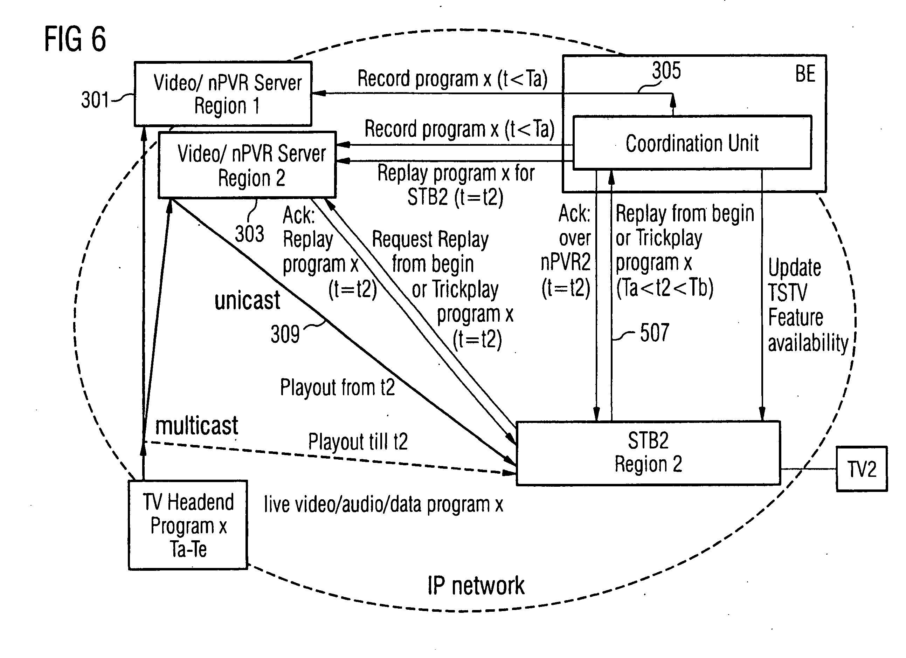

Fig. 6 illustrates the coordination of partially central nPVR servers 301, 303 for time shift television or lately started recordings. STB2 receives via BE directly or indirectly knowledge (indirectly means here: via a further server) about the actual availability of the time shift television (TSTV) function. Preferably, this information will be displayed on the screen or it will be dynamically added to the EPG. When a user decides to use program x in the TSTV mode the TSTV indication is displayed to other users. Even if the user leaves program x, the TSTV indication of program x remains available for the other users - at least for those who are located in the same geographical region - as long as at least one user uses program x in the TSTV mode. The TSTV-offer ends when there is no longer any recording demand from the operator or from any user. A further additional condition may be that currently no user employs a TSTV for program x.

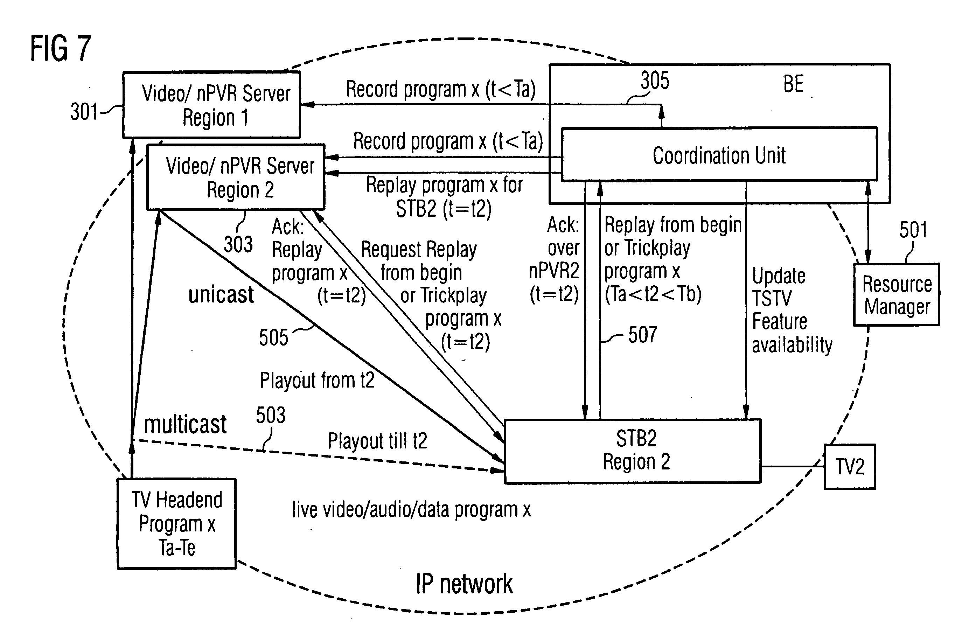

Fig. 7 illustrates the arrangement of a resource manager 501 for assisting the coordination of the nPVR servers 301, 303 for time shift television or lately started recordings. The usage of the TSTV function during zapping causes a frequent change between the multicast mode 503 and the unicast mode 505. In programs of general interest (e.g. football plays, sport events, newscasts) an inadmissibly high number of demands 119 for flash backs may occur. Thus, the system or the network may be overloaded, predictably or by accident. The BE limits the load of unicast streams 505, as it will not assign more streams than the respective nPVR architecture can handle. In view that the access network is generally limited with respect to bandwidth, a resource manager 501 may be employed. The resource manager 501 may evaluate how the resource requirements (e.g. at a Digital Subscriber Line Access Multiplexer (DSLAM) or at an edge router) may be covered. The offer of nPVR recordings and/or cPVR recordings and/or flash-backs may be optimized in dependence on the bandwidth of the access network and backbone network available for unicast sessions or in dependence on other critical resources as disk space. Taking such an evaluation into account, the BE may then permit, deny or increase a price for an actual user request for the TSTV feature. Or the BE may exclude this feature from being offered to users of a certain user group. This may be accomplished in the context of an update. The playback of an nPVR recording of a terminated program x, respectively of a running program x (as the access to Video on Demand, VoD), may be taken into account by employing priority rules for TSTV and other nPVR services.

nPVR recordings and/or cPVR recordings and/or flash-backs for single users may be included in the offer for subsequent complete recordings of a running or of a terminated program x. To avoid an overload by unicast 505, demands 119 may be denied ad-hoc. Or the number of demands 119 may be reduced in advance by withdrawal of the offer or by a restriction of time shift functions. The number of streams may be reduced by allowing only those time shifts which start at the beginning of program x or by serving a number of time-shift demands by one multicast. For collecting the time-shift demands for a multicast, a waiting period may be introduced.

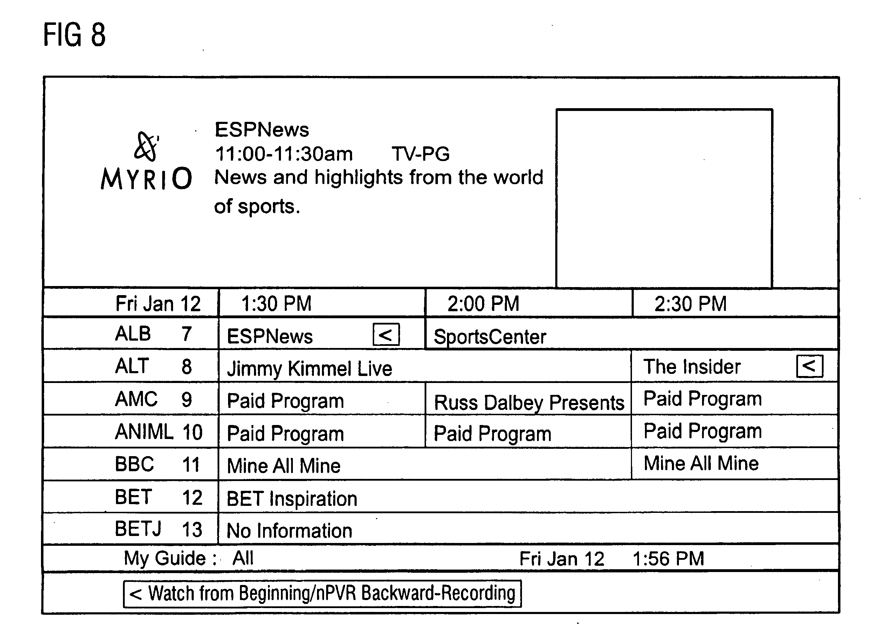

Fig. 8 shows a screen shot of an EPG menu which allows an nPVR backward recording. The new method may be employed in the EPG. For some selected or for all programs the IPTV operator may initiate recordings on the video server 301, 303 in the network. These programs will be tagged by a corresponding symbol (here "<"). Via user input - e.g. by pressing a play button when the desired program x is selected in the EPG - the end-user may go back to the recording initiated by the operator and may watch program x starting from the begin of program x. Trick play actions as fast-forward, pause, fast-rewind are possible in this time-shifted playing mode. The user may return to the live program of program x by pressing the stop button, which is generally arranged on the remote control unit and/or on the user equipment.

The user may still use the EPG as usual to select a desired program x, for example by navigation to the desired program x using cursor buttons and by a selection using the OK button on the remote control. This selection method may also be employed when at the same time a recording in the network is being performed by a background process.

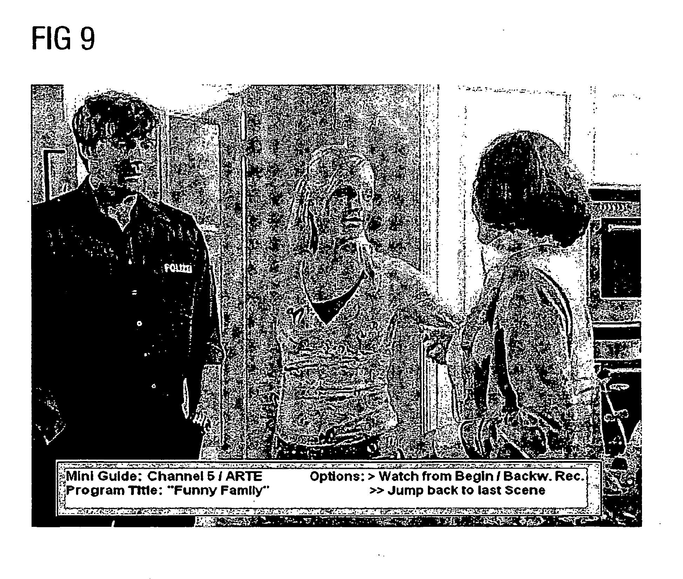

Fig. 9 shows a screen shot with offering information about the new zapping features, wherein the offering information is displayed in the info banner of a running program.

The end-user is in the full screen mode and watches a running program x. The operator has started an nPVR recording. A possibility is offered to the user for receiving a unicast stream to provide an access to a missed portion of program x. To indicate this possibility to the user corresponding symbols are provided or overlaid on the screen, for example, in an upper corner of the screen or in an info banner ("Mini EPG"). For this following functions may be offered simultaneously, wherein each function is being indicated by a dedicated symbol and/or indicator:
- start program x from begin;
- return to live program x (if being in the nPVR playback);
- fast rewind;
- fast forward (if being in the nPVR playback);
- additionally trick play functions are provided, as "skip forward/backward by 10 minutes", "jump to next main scene".

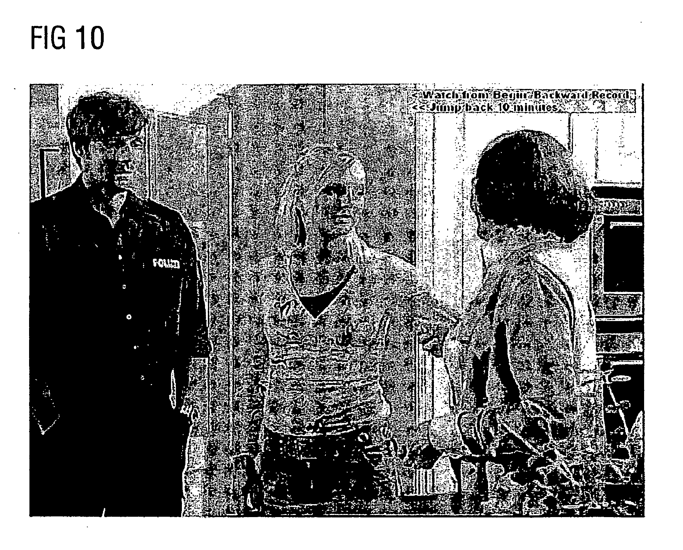

Fig. 10 shows a screen shot with offering information about the new zapping features, wherein the offering information is displayed in the television full screen mode.

If a switching to unicast 505 is not possible for additional users, because of a network load or because of a saturation of the nPVR systems, the symbols respective indicators are extinguished. Thereby, the feature is temporarily no longer available. A demand 119 for the feature will be answered with denial respectively with indication of an adapted fee.

Normally, the user programs the recordings of the desired TV programs in advance. Therefore, a timer in the system is set for the programmed recording. As soon as the timer expires - which, in the optimal case, coincides exactly with the begin of the desired program x - the recording will be started, and will be, from this time on, available for play back as a video in the nPVR library. Even if the recording is still running an output of the recorded portions may be started.

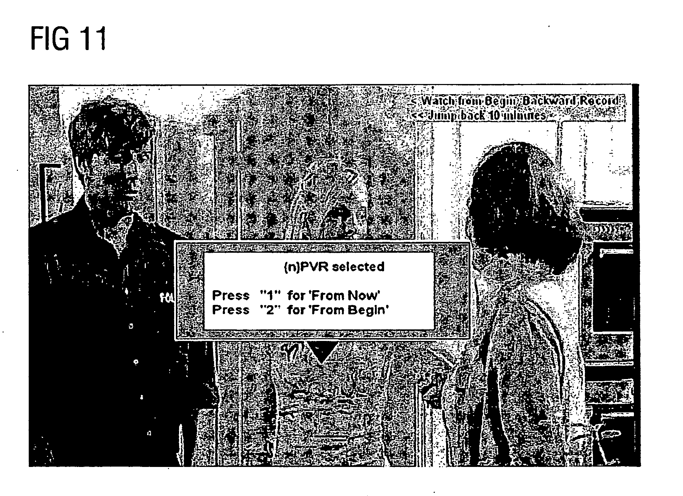

Fig. 11 shows a screen shot with offering information about the option "backward recording", if an end-user wants to start the recording of a running program and if the program is already being recorded. Programs which have been recorded e.g. due to operator request on video servers 301, 303 in the network and which during first point-to-multipoint distribution are offered in the time-shift mode to end-users may be used for a "backward recording" by the end-user. This is of relevance when users decide on impulse to record a running program x. Here, the offer to the user may be such that he/she can choose between a recording "From Now" and "From Begin". If the end-user decides for the complete recording ("From Begin") the recording started by the operator is employed and will be offered to the user as nPVR recording. Then, the recording is accessible in the private nPVR library of the end-user. The assignment of the recording to at least one user inhibits the deletion of the recording for the duration of the assignment.

The option "backward recording" may be offered with the start of the recording via the EPG. The option may also be offered at the start of an "instant recording", which is started by pressing the recording button of the user's remote control or set top box STB in the television full screen mode.

From the user's perspective following features of an Internet Protocol Television (IPTV) provider result:
- A user watches a running television program x and decides to record program x of which he has missed a portion.
- Therefore, he starts an immediate recording on a nPVR server 301, 303, for example by pressing on a record button located on the remote control unit of his STB.
- Now, the STB asks the user, whether he likes to begin the recording from now on or from the previous beginning of program x.
- The user answers this question via an input on his remote control unit.
- If the user only wants a recording to be started at the current time, the STB effects in the system an registration of a user-specific start time, such that for the user a play back is really only possible until the registered start time.
- If the user desires a complete recording of the running program x, such a registration of a user-specific start time and end time is unnecessary. These times coincide with the beginning and the end of program x. (Nevertheless, in the case of a demand for a complete recording of the running program x a termination before the end of program x may be facilitated; this requires a registration of a user-specific stop time.)

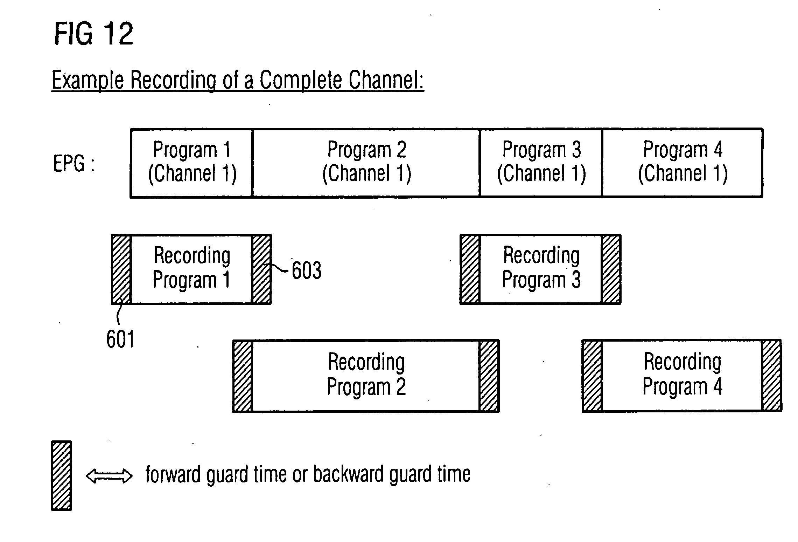

Fig. 12 illustrates how the recording of a complete television channel is organized. Normally, in the EPG the start times and end times are not accurate to a second. This results from the fact that EPG does not reflect program changes, which are made at short notice. The start time and end time of a recording cannot be determined accurately. Therefore, subsequent first point-to-multipoint distributions must be recorded in different files in a video server and must be stored separately, in order to be able to delete them separately. For a complete recording of a first point-to-multipoint distribution the BE must determine corresponding times (forward and backward guard times) for each of the programs/recordings on a sender/channel-specific or a source-specific basis. Then, the video server 301, 303 records both point-to-multipoint distributions via two separate input streams, each having a forward 601 and a backward 603 guard time. From this results that separate files are available on the server, wherein the files are mutually overlapping.

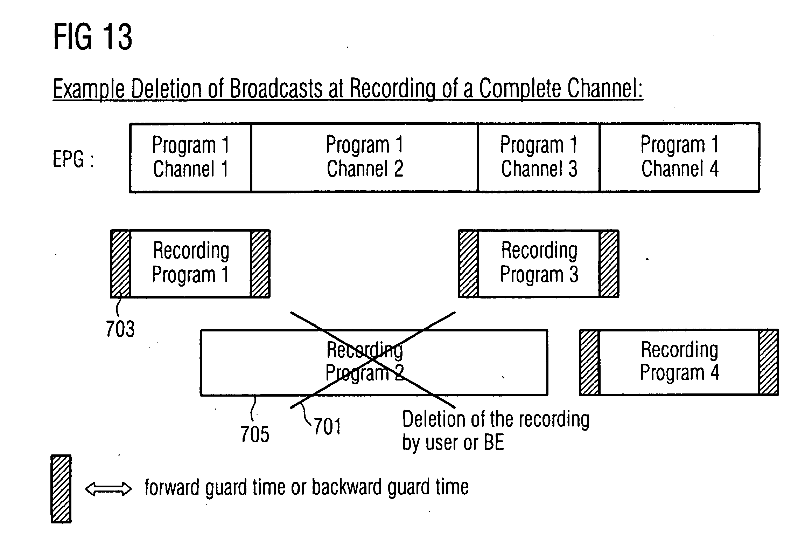

Fig. 13 illustrates how the deletion 701 of the content of a program is organized. A recording 703, 705 may be saved on the server 301, 303 until a last user of the recording allows the deletion 701 of the recording 703, 705. The content of the recording 703, 705 will be deleted as soon as no reference of any user exists any more to the recording 703, 705, respectively until the BE decides to delete this recording 703, 705. Alternatively or in addition a policy may be employed to save the recordings 703, 705 only for a maximum time. Using statistics at BE the operator may determine the remaining interest of the viewers for a distinct program x.

The figure contains following simplification. The recordings 703, 705 may be stored as sets of data blocks or data segments. Therefore, a recording of separated data streams is not necessary. In practice, all blocks or segments, respectively, will be stored and assigned to the presented complete recordings. Thus, blocks or segments, respectively, of overlap periods will be assigned to at least two recordings.

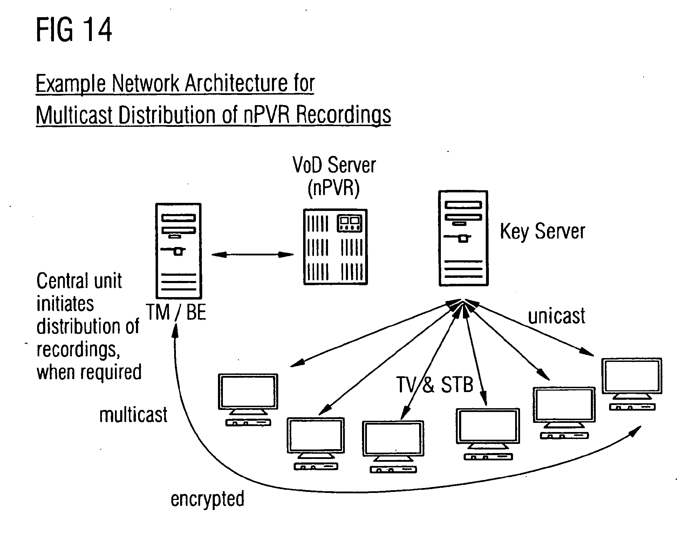

Fig. 14 illustrates the multicast distribution 503 of nPVR recordings 703. In addition, the recordings 703 could be copied from the nPVR server 301, 303 to a local cPVR of a user, in particular after expiration of a predetermined maximum time. This may be accomplished via a multicast distribution.

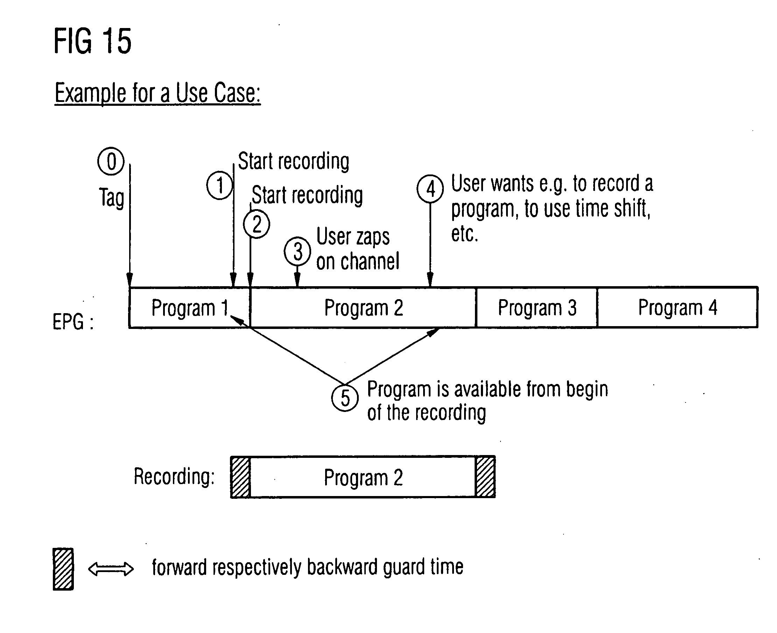

For elucidating the method of recording and the method of deletion of a recording, Fig. 15 illustrates an example of an expected use case:
1. The operator tags a first point-to-multipoint distribution 503 as nPVR-capable and as backward-recordable. Appropriate video servers 301, 303 will be manually or automatically assigned to the recording 703 initiated by the operator.
2. The central BE starts the recording 703 at a VoD server (e.g. with forward 601 and backward 603 guard times).
3. The first point-to-multipoint distribution 503 starts (inaccurate start time).
4. The user zaps to the appropriate channel or switches on a user terminal (e.g. a television set).
5. The user decides to watch a first point-to-multipoint distribution 503 from the beginning (switch-over to unicast).
6. Previously recorded portions of the first point-to-multipoint distribution 503 are available to the user (unicast 505). During the first point-to-multipoint distribution 503 the user may use "trick play", in particular he may flash back.
7. The user may tag the first point-to-multipoint distribution 503 as recorded. Thereby, the recording of the first point-to-multipoint distribution 503 is also available after the first point-to-multipoint distribution 503. At the end of the broadcast 113 of the program, the first point-to-multipoint distribution 113 generally covers the whole program, because of the advancing time. Consequently, generally also the "recording by tagging" covers the whole program.
8. The user selects from the menu "Recorded Broadcasts" the corresponding first point-to-multipoint distribution 503 and watches the corresponding recording 703.
9. The user deletes 701 the first point-to-multipoint distribution 703. From this results a notification to the BE, and the reference to the first point-to-multipoint distribution 703, which possibly covers the whole already ended program will be deleted.
10. The central BE deletes 701 the recording 703 at the video server 301, 303, when the last reference to the first point-to-multipoint distribution 503 has been deleted or is being deleted or is going to be deleted. There may be further preconditions for the deletion 701 of the recording 703 on the video server 301, 303, for example a minimal provision period of first point-to-multipoint distribution 503/multicast programs.

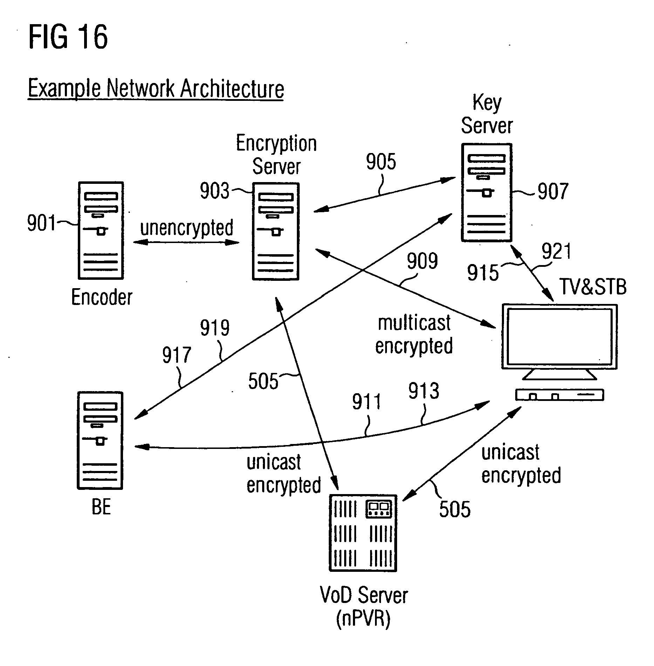

Fig. 16 shows the network architecture being adequate for encrypted programs.
1. The received video signal will be encoded, for example in an encoder 901, and will be transmitted to an encryption server 903.
2. The encryption server 903 encrypts the signal and deposits 905 the keys on the key server 907.
3. The encrypted signal will be distributed 909 (to a number of STBs and to video servers 301, 303).
4. The user decides to watch the running first point-to-multipoint distribution 503 (respectively the recording of a first point-to-multipoint distribution 503) from the beginning of program x.
5. Authorizations for use of the features will be queried 911 at the BE.
6. After a positive response 913 from the BE, the nPVR server 301, 303 starts the unicast 505 of the recording 703 to the STB (user).
7. The necessary keys 907 will be queried 915 at the key server.
8. The key server queries 917 the authorizations of the users at the BE.
9. After a positive response 919 from the BE, the necessary keys will be sent 921 to the STB.
10. The STB decrypts the video and outputs the video on the screen.

As shown, the method may also operate with encrypted channels. As the keys for a channel are very small in size, they may be stored for a long time on the key server 907. Each key contains supplementary data about the start time and the duration of its validity. Using this time information the STB may fetch necessary data from the encryption server 903. For authentication of the STB and for administration of the necessary rights (specifying which user may watch which programs/recorded first point-to-multipoint distributions 503) the key server 907 has an interface to the IPTV Middleware (BE). Thereby the key server 907 may check in addition, whether a STB possesses the necessary rights, and the key server 907 may deny the key request 915, if appropriate.

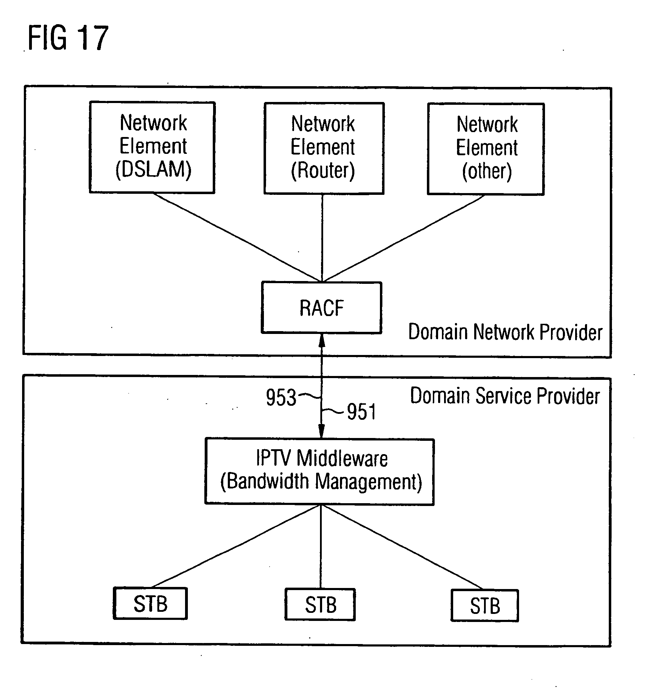

Fig. 17 shows the basic structure of a resource management system for an IPTV solution. The new features are based on a network-side recording of content. Disadvantageously, unicast streams 505 are generated for the output of the recordings 703. The unicast streams 505 load the network in a particularly critical area. Thus, with respect to applicability it is recommended to introduce the new features in combination with a bandwidth management (Resource Admission Control Function, RACF). The bandwidth management controls the application of the new features under the aspect of resource availability. To ensure, in spite of load peaks, an unobjectionable transmission quality (QoS) in the network, the end-user is only permitted to switch from multicast to unicast as long as sufficient network resources are available. Load peaks develop when a high number of end-users want to switch to unicast at almost the same time to review a scene for a second time. This situation typically occurs when a program shows a distinct event of particular interest, for example a goal in a football play.

RACF is a system that derives knowledge about the load situation in the network by evaluating acquired load information, thereby taking knowledge about the network topology into account. The load information may be acquired by periodically scanning/querying the network elements (DSLAM, Edge Router, Router). The RACF determines the network load, for example, by periodical polling of the DSLAM and (Edge-)Router components (for example via SNMP-based status queries). To facilitate at peak times of real-time traffic more unicast streams 505 than in the standard configuration, advanced RACF systems may control a dynamical switching of the traffic in the network elements 127. This may be accomplished by reduction of the data traffic and by allowance of more real-time traffic in network elements 127.

RACF fulfills the resource management function discussed above. A great advantage is the interface to the BE for the decision of the switch-over from multicast 503 to unicast 505.

For the previously described new zapping feature a scenario could be as follows:
1. An end-user wants to watch a running program x from the begin of program x. The corresponding option is offered at the user interface (UI) of the end-user.
2. The end-user presses the "PLAY" button to initiate the play "starting at begin of the program".
3. The STB sends a policy message to the IPTV Middleware (BE) for checking the current traffic load.
4. Using the RACF, the Middleware (BE) checks the current traffic situation in view of the actual user demand and returns a corresponding response to the STB client.
5. Dependent on the received response the switching-over from multicast-live-television to unicast-retrospective-television will be initiated.

RACF provides 133 knowledge about the network load. This knowledge is employed for updating those features offered to the user, which imply a switch-over to unicast 505. Spontaneous messages 951 from RACF to BE or cyclical queries 953 from BE to RACF may be used therefore.

It should be noted that the term "comprising" does not exclude other elements or steps and the "a" or "an" does not exclude a plurality. Also elements described in association with different embodiments may be combined. Reference signs in the claims should not be construed as limiting the scope of the claims.

Summarized a method for distribution of media content of a television program is provided, wherein the method comprises following steps:
- a recording of a first data of the media content on a storage medium,
- a first point-to-multipoint distribution of a second data of the media content,
- a reception of the second data of the media content using a first user equipment,
- a transmission of a demand for a special service from the first user equipment to a service control means,
- a detection of a load status of a network element,
- an execution of a load control action by the service control means for changing the load status of the network element in dependence on the detected load status, and
- a provision of the special service, wherein the network element is employed for providing the special service.

### List of reference signs:

- 101: television distribution system
- 103: media content
- 105: first data of the media content
- 107: second data of the media content
- 109: television program
- 111: recording
- 112: storage medium
- 113: first point-to-multipoint distribution
- 115: reception of the second data of the media content
- 117: first user equipment
- 119: demand
- 121: service control means
- 123: recorded first data of the media content
- 125: provision of special service
- 127: network element
- 129: load control message
- 131: second user equipment
- 133: load status
- 135: assignment of recording demands to recording units
- 137: notification about storage capacity
- 201: method for load control
- 203: 1st method step (recording of a 1st portion of media content)
- 205: 2nd method step (first multicast distribution)
- 207: 3rd method step (reception of a 2nd portion of the media content)
- 209: 4th method step (transmission of demand)
- 211: 5th method step (provision of special service)
- 301: video/nPVR server region 1
- 303: video/nPVR server region 2
- 305: initiation of a recording
- 307: request to flash back
- 309: output of a program
- 501: Resource Manager
- 503: multicast
- 505: unicast
- 601: forward guard time
- 603: backward guard time
- 701: recording program 2
- 703: recording program 1
- 705: deletion of recording of program 2
- 901: encoder
- 903: encryption server
- 905: deposition of key on the key server
- 907: key server
- 909: multicast encrypted
- 911: feature authorization query
- 913: feature authorization response
- 915: key query
- 917: user authorization query
- 919: user authorization response
- 921: key submission
- 951: spontaneous message from RACF to BE
- 953: cyclical query from BE to RACF

## Claims

1. A method (201) for distribution of a media content (103) of a television program (109) in a television distribution network, wherein a multi-user personal video recorder media server is positioned at the television distribution network wherein the multi-user personal video recorder media server includes a storage medium (112) for storing television signals, wherein the media content (103) comprises a first portion (105) and a second portion (107) of the media content (103) of the television program (109), wherein the method (201) comprises following steps:
- a recording (111) of the first portion (105) of the media content (103) on the storage medium (112),
- a first point-to-multipoint distribution (113) of the second portion (107) of said media content (103), wherein the second portion (107) of said media content (103) is completely or at least partially different to the first portion (105) of said media content (103),
- a reception (115) of the second portion (107) of said media content (103) using a first user equipment (117),
- a transmission of a demand (119) for a special service for recording and playing back of portions of the media content (103) from the first user equipment (117) to a service control means (121), wherein the demand (119) for the special service takes place when the first point-to-multipoint distribution (113) is still in progress, or wherein the demand (119) for the special service takes place after or before the first point-to-multipoint distribution (113) takes place, wherein execution of the special service comprises at least one of a transmission of a portion of the recorded first portion (123) of the media content (103) to the first user equipment (117), of a setting of a user-specific start marker, and of a setting of a user-specific stop marker,
- a detection of a load status (133) of at least one network component (127) by the service control means (121), wherein the at least one network component (127) is employable for the special service in dependence on the load status (133) of the at least one network component (127),
- execution of a load control action by the service control means (121) appropriate for changing the load of the at least one network component (127) in dependence on the detected load status, wherein the load control action for changing the load status of the at least one network component (127) comprises a generation of a load control message (129) and a transmission of the load control message (129) from the service control means (121) to the first user equipment (117), and
- a provision (125) of the special service, wherein the at least one network component (127) is employed for providing the special service.

2. The method according to claim 1, wherein the load control action comprises at least one of an assigning a resource to the special service, an assigning of traffic to a resource, an enabling of a resource, a limiting of traffic on a resource, a bundling/concentrating of traffic onto a resource, and a temporarily closing down the special service for all or a subset of users.

3. The method according to claim 1 or 2, wherein the demand includes at least one of a pointer to the television program (109) and of a pointer to the first point-to-multipoint distribution (113) of the second portion (107) of said media content.

4. The method according to one of claims 1 to 3, wherein the load control action is performed in dependence on an actual or forecasted load impact, wherein the load impact is caused by a provision of the special service for a second user equipment (131).

5. The method according to one of claims 1 to 4, wherein the load control message (129) causes the first user equipment (117) to output a service offering information or a service revocation information to a first user.

6. The method according to claim 5, wherein the service offering respectively revocation information is displayed for visual reception by the first user.

7. The method according to one of claims 5 to 6, wherein the generation of the load control message includes a determination of an increased price level at a high load status and a determination of a reduced price level at a low load status, and wherein the price levels are determined user-specifically..

8. The method according to one of claims 1 to 7, wherein the network component (127) is a cable or a digital line access multiplexer serving a residential area.

9. The method according to one of claims 1 to 8, wherein the load control action for changing the load status of the at least one network component (127) comprises an output of price information at the first user equipment (117).

10. The method according to one of claims 1 to 9, wherein the special service comprises a time-shift function.

11. The method according to one of claims 1 to 10, wherein the special service is at least one of a trick-play function, a pause function, a playback-at-a-later-time function, a catch-up function, an instant-replay function, a fast-forward function, a rewind function, and a fast-rewind function.

12. The method according to one of claims 1 to 11, wherein the special service is a storage and accessibility of media content or parts thereof.

13. The method according to one of claims 1 to 12, wherein a number of unicast streams is limited by serving only those demands (119) for the special service which result in a time shift that starts at the beginning of the media content (103).

14. The method according to one of claims 1 to 13, wherein one multicast serves a number of demands (119) for the special service, in order to reduce a number of necessary unicast streams.

15. The method according to claim 14, wherein a waiting period is employed for collecting the demands (119).

16. The method according to claim 15, wherein during a waiting period each first user equipment (117) of a plurality of first user equipments (117) transmits a demand (119) for the special service, and wherein all these demands (119) transmitted during the waiting period are answered by one single provision (125) of the special service.

17. The method according to one of claims 1 to 16, wherein a distribution of the recording is determined in dependence on the load status of the at least one network component (127).

18. The method according to one of claims 1 to 17, wherein the recording is performed at a second user equipment (131) selected in dependence on the load status of the at least one network component (127).

19. The method according to one of claims 1 to 18, wherein a user-specific provision of the special service to a second user equipment (131) serves for the provision of the special service to the first user equipment (117).

20. A system for distribution of a media content (103) of a television program (109) in a television distribution network, wherein a multi-user personal video recorder media server is positioned at the television distribution network wherein the multi-user personal video recorder media server includes a storage medium (112) for storing television signals, wherein the media content (103) comprises a first portion (105) and a second portion (107) of the media content (103) of the television program (109), the system comprising a first user equipment (117) for generating and submitting a demand for a special service for recording and playing back of portions of the media content (103), the storage medium (112), a service control means (121), and at least one network component (127) employable for providing the special service, wherein
- the first portion (105) of the media content (103) is recorded on the storage medium (112),
- the second portion (107) of the media content (103) is distributed by way of a first point-to-multipoint distribution (113), wherein the second portion (107) of said media content (103) is completely or at least partially different to the first portion (105) of said media content (103),
- the second portion (107) of the media content (103) is received (115) using the first user equipment (117),
- the demand (119) for the special service is transmitted from the first user equipment (117) to the service control means (121), wherein the demand (119) for the special service takes place when the first point-to-multipoint distribution (113) is still in progress, or wherein the demand (119) for the special service takes place after or before the first point-to-multipoint distribution (113) takes place, wherein execution of the special service comprises at least one of a transmission of a portion of the recorded first portion (123) of the media content (103) to the first user equipment (117), of a setting of a user-specific start marker, and of a setting of a user-specific stop marker,
- a load status (133) of the at least one network component (127) is detected by the service control means (121), wherein the at least one network component (127) is employable for the special service in dependence on the load status (133) of the at least one network component (127),
- a load control action is executed by the service control means (121) appropriate for changing the load of the at least one network component (127) in dependence on the detected load status, wherein the load control action for changing the load status of the at least one network component (127) comprises a generation of a load control message (129) and a transmission of the load control message (129) from the service control means (121) to the first user equipment (117),
- the special service is provided, wherein the at least one network component (127) is employed for providing the special service.

21. The system of claim 20 further comprising a means (RACF) for bandwidth management which is designed to acquire knowledge about the load status of the at least one network component (127) and to influence the load status at the at least one network component (127).

22. The system according to claim 21, wherein the influencing of the load status of the at least one network component (127) is performed by providing load information to the service control means (121).

23. The system according to claim 21 or 22, wherein the influencing of the load status of the at least one network component (127) is performed by providing information to the first user equipment (117).

24. The system according to one of claims 21 to 23, wherein the influencing of the at least one network component (127) is performed by providing information to the at least one network component (127).

25. The system according to one of claims 21 to 24, wherein the means (RACF) for bandwidth management is included in the service control means (121).

## Patentansprüche

1. Verfahren (201) zur Verteilung eines Medieninhalts (103) eines Fernsehprogramms (109) in einem Fernsehverteilungsnetzwerk, wobei ein Personal Video Recorder Medienserver für mehrere Benutzer in dem Fernsehverteilungsnetzwerk positioniert ist, wobei der Personal Video Recorder Medienserver für mehrere Benutzer ein Speichermedium (112) zum Speichern von Fernsehsignalen umfasst, wobei der Medieninhalt (103) einen ersten Teil (105) und einen zweiten Teil (107) des Medieninhalts (103) des Fernsehprogramms (109) umfasst, wobei das Verfahren (201) die folgenden Schritte umfasst:
- eine Aufzeichnung (111) des ersten Teils (105) des Medieninhalts (103) auf dem Speichermedium (112),
- eine erste Punkt-zu-Mehrpunkt-Verteilung (113) des zweiten Teils (107) des Medieninhalts (103), wobei der zweite Teil (107) des Medieninhalts (103) völlig oder mindestens teilweise von dem ersten Teil (105) des Medieninhalts (103) verschieden ist,
- ein Empfang (115) des zweiten Teils (107) des Medieninhalts (103) unter Verwendung eines ersten Benutzergeräts (117),
- eine Übertragung einer Anforderung (119) eines Spezialdienstes zum Aufzeichnen und Wiedergeben von Teilen des Medieninhalts (103) von dem ersten Benutzergerät (117) zu einem Dienststeuermittel (121), wobei die Anforderung (119) des Spezialdienstes stattfindet, wenn die erste Punkt-zu-Mehrpunkt-Verteilung (113) noch abläuft oder wobei die Anforderung (119) des Spezialdienstes stattfindet, nachdem oder bevor die erste Punkt-zu-Mehrpunkt-Verteilung (113) stattfindet, wobei die Ausführung des Spezialdienstes mindestens eine der folgenden Alternativen umfasst: eine Übertragung eines Teils des aufgezeichneten ersten Teils (123) des Medieninhalts (103) zu dem ersten Benutzergerät (117), eine Einstellung einer benutzerspezifischen Startmarkierung, eine Einstellung einer benutzerspezifischen Stoppmarkierung,
- eine Detektion eines Laststatus (133) mindestens einer Netzwerkkomponente (127) durch das Dienststeuermittel (121), wobei die mindestens eine Netzwerkkomponente (127) für den Spezialdienst in Abhängigkeit von dem Laststatus (133) der mindestens einen Netzwerkkomponente (127) verwendbar ist,
- Ausführung einer Laststeueraktion durch das Dienststeuermittel (121), die dafür geeignet ist, die Last der mindestens einen Netzwerkkomponente (127) in Abhängigkeit von dem detektierten Laststatus zu ändern, wobei die Laststeueraktion zum Ändern des Laststatus der mindestens einen Netzwerkkomponente (127) eine Erzeugung einer Laststeuernachricht (129) und eine Übertragung der Laststeuernachricht (129) von dem Dienststeuermittel (121) zu dem ersten Benutzergerät (117) umfasst, und
- eine Bereitstellung (125) des Spezialdienstes, wobei die mindestens eine Netzwerkkomponente (127) zum Bereitstellen des Spezialdienstes verwendet wird.

2. Verfahren nach Anspruch 1, wobei die Laststeueraktion mindestens eine der folgenden Alternativen umfasst: ein Zuordnen eines Betriebsmittels zu dem Spezialdienst, ein Zuordnen von Verkehr zu einem Betriebsmittel, ein Freigeben eines Betriebsmittels, ein Begrenzen von Verkehr auf einem Betriebsmittel, eine Bündelung/Konzentration von Verkehr auf ein Betriebsmittel, ein vorübergehendes Herunterfahren des Spezialdienstes für alle Benutzer oder eine Teilmenge von Benutzern.

3. Verfahren nach Anspruch 1 oder 2, wobei die Anforderung einen Zeiger auf das Fernsehprogramm (109) und/oder einen Zeiger auf die erste Punkt-zu-Mehrpunkt-Verteilung (113) des zweiten Teils (107) des Medieninhalts umfasst.

4. Verfahren nach einem der Ansprüche 1 bis 3, wobei die Laststeueraktion in Abhängigkeit von einer tatsächlichen oder vorhergesagten Lastauswirkung ausgeführt wird, wobei die Lastauswirkung durch eine Bereitstellung des Spezialdienstes für ein zweites Benutzergerät (131) verursacht wird.

5. Verfahren nach einem der Ansprüche 1 bis 4, wobei die Laststeuernachricht (129) bewirkt, dass das erste Benutzergerät (117) eine Dienstangebotsinformation oder eine Dienstwiderrufsinformation an einen ersten Benutzer ausgibt.

6. Verfahren nach Anspruch 5, wobei die Dienstangebots- bzw.
- widerrufsinformation für visuelle Rezeption durch den ersten Benutzer angezeigt wird.

7. Verfahren nach einem der Ansprüche 5 bis 6, wobei die Erzeugung der Laststeuernachricht eine Bestimmung eines erhöhten Preisniveaus bei einem hohen Laststatus und eine Bestimmung eines verringerten Preisniveaus bei einem niedrigen Laststatus umfasst und wobei die Preisniveaus benutzerspezifisch bestimmt werden.

8. Verfahren nach einem der Ansprüche 1 bis 7, wobei die Netzwerkkomponente (127) ein Kabel oder ein digitaler Leitungsanschlussmultiplexer ist, das bzw. der ein Wohngebiet versorgt.

9. Verfahren nach einem der Ansprüche 1 bis 8, wobei die Laststeueraktion zum Ändern des Laststatus der mindestens einen Netzwerkkomponente (127) eine Ausgabe von Preisinformationen an dem ersten Benutzergerät (117) umfasst.

10. Verfahren nach einem der Ansprüche 1 bis 9, wobei der Spezialdienst eine Zeitverschiebungsfunktion umfasst.

11. Verfahren nach einem der Ansprüche 1 bis 10, wobei der Spezialdienst mindestens eine der folgenden Alternativen ist:
eine Spezialwiedergabefunktion, eine Pausenfunktion, eine Funktion der Wiedergabe zu einem späteren Zeitpunkt, eine Nachholfunktion, eine Sofortwiederholungsfunktion, eine Vorspulfunktion, eine Rückspulfunktion, eine schnelle Rückspulfunktion.

12. Verfahren nach einem der Ansprüche 1 bis 11, wobei der Spezialdienst eine Speicherung und Zugänglichkeit von Medieninhalt oder Teilen davon ist.

13. Verfahren nach einem der Ansprüche 1 bis 12, wobei eine Anzahl von Unicast-Strömen begrenzt wird, indem nur die Anforderungen (119) des Spezialdienstes versorgt werden, die zu einer Zeitverschiebung führen, die am Anfang des Medieninhalts (103) beginnt.

14. Verfahren nach einem der Ansprüche 1 bis 13, wobei ein Multicast eine Anzahl von Anforderungen (119) des Spezialdienstes versorgt, um eine Anzahl notwendiger Unicast-Ströme zu verringern.

15. Verfahren nach Anspruch 14, wobei eine Warteperiode zum Sammeln der Anforderungen (119) verwendet wird.

16. Verfahren nach Anspruch 15, wobei während einer Warteperiode jedes erste Benutzergerät (117) mehrerer erster Benutzergeräte (117) eine Anforderung (119) des Spezialdienstes überträgt und wobei alle diese Anforderungen (119), die während der Warteperiode übertragen werden, durch eine einzige Bereitstellung (125) des Spezialdienstes beantwortet werden.

17. Verfahren nach einem der Ansprüche 1 bis 16, wobei eine Verteilung der Aufzeichnung in Abhängigkeit von dem Laststatus der mindestens einen Netzwerkkomponente (127) bestimmt wird.

18. Verfahren nach einem der Ansprüche 1 bis 17, wobei die Aufzeichnung in einem zweiten Benutzergerät (131) durchgeführt wird, das in Abhängigkeit von dem Laststatus der mindestens einen Netzwerkkomponente (127) ausgewählt wird.

19. Verfahren nach einem der Ansprüche 1 bis 18, wobei eine benutzerspezifische Bereitstellung des Spezialdienstes für ein zweites Benutzergerät (131) für die Bereitstellung des Spezialdienstes für das erste Benutzergerät (117) sorgt.

20. System zur Verteilung eines Medieninhalts (103) eines Fernsehprogramms (109) in einem Fernsehverteilungsnetzwerk, wobei ein Personal Video Recorder Medienserver für mehrere Benutzer in dem Fernsehverteilungsnetzwerk positioniert ist, wobei der Personal Video Recorder Medienserver für mehrere Benutzer ein Speichermedium (112) zum Speichern von Fernsehsignalen umfasst, wobei der Medieninhalt (103) einen ersten Teil (105) und einen zweiten Teil (107) des Medieninhalts (103) des Fernsehprogramms (109) umfasst und das System ein erstes Benutzergerät (117) zum Erzeugen und Zustellen einer Anforderung eines Spezialdienstes zum Aufzeichnen und Wiedergeben von Teilen des Medieninhalts (103), das Speichermedium (112), ein Dienststeuermittel (121) und mindestens eine zum Bereitstellen des Spezialdienstes verwendbare Netzwerkkomponente (127) umfasst,
- wobei der erste Teil (105) des Medieninhalts (103) auf dem Speichermedium (112) aufgezeichnet wird,
- wobei der zweite Teil (107) des Medieninhalts (103) mittels einer ersten Punkt-zu-Mehrpunkt-Verteilung (113) Verteilt wird, wobei der zweite Teil (107) des Medieninhalts (103) völlig oder mindestens teilweise von dem ersten Teil (105) des Medieninhalts (103) verschieden ist,
- wobei der zweite Teil (107) des Medieninhalts (103) unter Verwendung des ersten Benutzergeräts (117) empfangen wird (115),
- wobei die Anforderung (119) des Spezialdienstes von dem ersten Benutzergerät (117) zu dem Dienststeuermittel (121) übertragen wird, wobei die Anforderung (119) des Spezialdienstes stattfindet, wenn die erste Punkt-zu-Mehrpunkt-Verteilung (113) noch abläuft, oder wobei die Anforderung (119) des Spezialdienstes stattfindet, nachdem oder bevor die erste Punkt-zu-Mehrpunkt-Verteilung (113) stattfindet, wobei die Ausführung des Spezialdienstes mindestens eine der folgenden Alternativen umfasst: eine Übertragung eines Teils des aufgezeichneten ersten Teils (123) des Medieninhalts (103) zu dem ersten Benutzergerät (117), eine Einstellung einer benutzerspezifischen Startmarkierung, eine Einstellung einer benutzerspezifischen Stoppmarkierung,
- wobei ein Laststatus (133) der mindestens einen Netzwerkkomponente (127) durch das Dienststeuermittel (121) detektiert wird, wobei die mindestens eine Netzwerkkomponente (127) in Abhängigkeit von dem Laststatus (133) der mindestens einen Netzwerkkomponente (127) für den Spezialdienst verwendbar ist,
- wobei eine Laststeueraktion durch das Dienststeuermittel (121) ausgeführt wird, die dafür geeignet ist, die Last der mindestens einen Netzwerkkomponente (127) in Abhängigkeit von dem detektierten Laststatus zu ändern, wobei die Laststeueraktion zum Ändern des Laststatus der mindestens einen Netzwerkkomponente (127) eine Erzeugung einer Laststeuernachricht (129) und eine Übertragung der Laststeuernachricht (129) von dem Dienststeuermittel (121) zu dem ersten Benutzergerät (117) umfasst,
- wobei der Spezialdienst bereitgestellt wird, wobei die mindestens eine Netzwerkkomponente (127) zum Bereitstellen des Spezialdienstes verwendet wird.

21. System nach Anspruch 20, das ferner ein Mittel (RACF) zur Bandbreitenverwaltung umfasst, das dafür ausgelegt ist, Kenntnis über den Laststatus der mindestens einen Netzwerkkomponente (127) zu beschaffen und den Laststatus in der mindestens einen Netzwerkkomponente (127) zu beeinflussen.

22. System nach Anspruch 21, wobei das Beeinflussen des Laststatus der mindestens einen Netzwerkkomponente (127) durchgeführt wird, indem dem Dienststeuermittel (121) Lastinformationen zugeführt werden.

23. System nach Anspruch 21 oder 22, wobei das Beeinflussen des Laststatus der mindestens einen Netzwerkkomponente (127) durchgeführt wird, indem dem ersten Benutzergerät (117) Informationen zugeführt werden.

24. System nach einem der Ansprüche 21 bis 23, wobei das Beeinflussen der mindestens einen Netzwerkkomponente (127) durchgeführt wird, indem der mindestens einen Netzwerkkomponente (127) Informationen zugeführt werden.

25. System nach einem der Ansprüche 21 bis 24, wobei das Mittel (RACF) zur Bandbreitenverwaltung in dem Dienststeuermittel (121) enthalten ist.

## Revendications

1. Un procédé (201) de diffusion d'un contenu multimédia (103) d'un programme de télévision (109) sur un réseau de diffusion de télévision, dans lequel un serveur multimédia d'enregistreur vidéo personnel multi-utilisateur est positionné sur le réseau de diffusion de télévision, dans lequel le serveur multimédia d'enregistreur vidéo personnel multi-utilisateur comprend un support de stockage (112) destiné à stocker des signaux de télévision, dans lequel le contenu multimédia (103) comprend une première partie (105) et une deuxième partie (107) du contenu multimédia (103) du programme de télévision (109), dans lequel le procédé (201) comprend les opérations suivantes :
- un enregistrement (111) de la première partie (105) du contenu multimédia (103) sur le support de stockage (112),
- une première diffusion point à multipoint (113) de la deuxième partie (107) dudit contenu multimédia (103), dans laquelle la deuxième partie (107) dudit contenu multimédia (103) est totalement ou au moins partiellement différente de la première partie (105) dudit contenu multimédia (103),
- une réception (115) de la deuxième partie (107) dudit contenu multimédia (103) au moyen d'un premier équipement d'utilisateur (117),
- une transmission d'une demande (119) pour un service spécial d'enregistrement et de lecture de parties du contenu multimédia (103) à partir du premier équipement d'utilisateur (117) vers un moyen de commande de service (121), dans laquelle la demande (119) pour le service spécial se déroule pendant que la première diffusion point à multipoint (113) est encore en cours, ou dans laquelle la demande (119) pour le service spécial se déroule après ou avant que la première diffusion point à multipoint (113) ne se déroule, dans laquelle l'exécution du service spécial comprend au moins une opération parmi une transmission d'une partie de la première partie enregistrée (123) du contenu multimédia (103) au premier équipement d'utilisateur (117), une définition d'un marqueur de début propre à l'utilisateur, et une définition d'un marqueur d'arrêt propre à l'utilisateur,
- une détection d'un état de charge (133) d'au moins un composant de réseau (127) par le moyen de commande de service (121), dans laquelle le au moins un composant de réseau (127) est utilisable pour le service spécial en fonction de l'état de charge (133) du au moins un composant de réseau (127),
- l'exécution d'une opération de commande de charge par le moyen de commande de service (121) appropriée de façon à modifier la charge du au moins un composant de réseau (127) en fonction de l'état de charge détecté, dans laquelle l'opération de commande de charge destinée à modifier l'état de charge du au moins un composant de réseau (127) comprend une génération d'un message de commande de charge (129) et une transmission du message de commande de charge (129) du moyen de commande de service (121) au premier équipement d'utilisateur (117), et
- une fourniture (125) du service spécial, dans laquelle le au moins un composant de réseau (127) est utilisé pour fournir le service spécial.

2. Le procédé selon la revendication 1, dans lequel l'opération de commande de charge comprend au moins une opération parmi une affectation d'une ressource au service spécial, une affectation de trafic à une ressource, une activation d'une ressource, une limitation du trafic sur une ressource, un regroupement/concentration du trafic sur une ressource, et une fermeture temporaire du service spécial pour tous les utilisateurs ou un sous-ensemble d'utilisateurs .

3. Le procédé selon la revendication 1 ou 2, dans lequel la demande comprend au moins un élément parmi un pointeur vers le programme de télévision (109) et un pointeur vers la première diffusion point à multipoint (113) de la deuxième partie (107) dudit contenu multimédia.

4. Le procédé selon l'une quelconque des revendications 1 à 3, dans lequel l'opération de commande de charge est exécutée en fonction d'un impact de charge réel ou prévu, dans lequel l'impact de charge est provoqué par une fourniture du service spécial pour un deuxième équipement d'utilisateur (131).

5. Le procédé selon l'une quelconque des revendications 1 à 4, dans lequel le message de commande de charge (129) amène le premier équipement d'utilisateur (117) à envoyer une information d'offre de services ou une information de révocation de services à un premier utilisateur.

6. Le procédé selon la revendication 5, dans lequel l'information d'offre ou de révocation de service est affichée pour réception visuelle par le premier utilisateur.

7. Le procédé selon l'une quelconque des revendications 5 à 6, dans lequel la génération du message de commande de charge comprend une détermination d'un niveau de prix accru à un état de charge élevé et une détermination d'un niveau de prix réduit à un état de charge faible, et dans lequel les niveaux de prix sont déterminés de manière spécifique à l'utilisateur.

8. Le procédé selon l'une quelconque des revendications 1 à 7, dans lequel le composant de réseau (127) est un câble ou un multiplexeur d'accès à ligne numérique desservant une zone résidentielle.

9. Le procédé selon l'une quelconque des revendications 1 à 8, dans lequel l'opération de commande de charge destinée à modifier l'état de charge du au moins un composant de réseau (127) comprend un envoi d'informations de prix au premier équipement d'utilisateur (117).

10. Le procédé selon l'une quelconque des revendications 1 à 9, dans lequel le service spécial comprend une fonction de décalage temporel.

11. Le procédé selon l'une quelconque des revendications 1 à 10, dans lequel le service spécial est au moins une fonction parmi une fonction lecture en mode spécial, une fonction pause, une fonction lecture ultérieurement, une fonction de rattrapage, une fonction de relecture instantanée, une fonction avance rapide, une fonction rembobinage et une fonction rembobinage rapide.

12. Le procédé selon l'une quelconque des revendications 1 à 11, dans lequel le service spécial est un service de stockage et d'accessibilité de contenus multimédias ou de parties de ceux-ci.

13. Le procédé selon l'une quelconque des revendications 1 à 12, dans lequel un nombre de flux en monodiffusion est limité par la desserte uniquement des demandes (119) pour le service spécial qui résultent en un décalage temporel qui démarre au début du contenu multimédia (103).

14. Le procédé selon l'une quelconque des revendications 1 à 13, dans lequel une multidiffusion dessert un nombre de demandes (119) pour le service spécial, afin de réduire un nombre de flux en monodiffusion nécessaires.

15. Le procédé selon la revendication 14, dans lequel une période d'attente est utilisée pour recueillir les demandes (119).

16. Le procédé selon la revendication 15, dans lequel, au cours d'une période d'attente, chaque premier équipement d'utilisateur (117) d'une pluralité de premiers équipements d'utilisateur (117) transmet une demande (119) pour le service spécial, et dans lequel toutes ces demandes (119) transmises au cours de la période d'attente sont satisfaites par une fourniture unique (125) du service spécial.

17. Le procédé selon l'une quelconque des revendications 1 à 16, dans lequel une diffusion de l'enregistrement est déterminée en fonction de l'état de charge du au moins un composant de réseau (127).

18. Le procédé selon l'une quelconque des revendications 1 à 17, dans lequel l'enregistrement est exécuté sur un deuxième équipement d'utilisateur (131) sélectionné en fonction de l'état de charge du au moins un composant de réseau (127).

19. Le procédé selon l'une quelconque des revendications 1 à 18, dans lequel une fourniture spécifique à l'utilisateur du service spécial à un deuxième équipement d'utilisateur (131) remplace la fourniture du service spécial au premier équipement d'utilisateur (117).

20. Un système de diffusion d'un contenu multimédia (103) d'un programme de télévision (109) sur un réseau de diffusion de télévision, dans lequel un serveur multimédia d'enregistreur vidéo personnel multi-utilisateur est positionné sur le réseau de diffusion de télévision, dans lequel le serveur multimédia d'enregistreur vidéo personnel multi-utilisateur comprend un support de stockage (112) destiné à stocker des signaux de télévision, dans lequel le contenu multimédia (103) comprend une première partie (105) et une deuxième partie (107) du contenu multimédia (103) du programme de télévision (109), le système comprenant un premier équipement d'utilisateur (117) destiné à générer et à soumettre une demande pour un service spécial d'enregistrement et de lecture de parties du contenu multimédia (103), le support de stockage (112), un moyen de commande de service (121) et au moins un composant de réseau (127) utilisable pour fournir le service spécial, dans lequel
- la première partie (105) du contenu multimédia (103) est enregistrée sur le support de stockage (112),
- la deuxième partie (107) dudit contenu multimédia (103) est diffusée au moyen d'une première diffusion point à multipoint (113), dans lequel la deuxième partie (107) dudit contenu multimédia (103) est totalement ou au moins partiellement différente de la première partie (105) dudit contenu multimédia (103),
- la deuxième partie (107) dudit contenu multimédia (103) est reçue (115) au moyen du premier équipement d'utilisateur (117),
- la demande (119) pour le service spécial est transmise à partir du premier équipement d'utilisateur (117) au moyen de commande de service (121), dans laquelle la demande (119) pour le service spécial se déroule pendant que la première diffusion point à multipoint (113) est encore en cours, ou dans laquelle la demande (119) pour le service spécial se déroule après ou avant que la première diffusion point à multipoint (113) ne se déroule, dans laquelle l'exécution du service spécial comprend au moins une opération parmi une transmission d'une partie de la première partie enregistrée (123) du contenu multimédia (103) au premier équipement d'utilisateur (117), une définition d'un marqueur de début propre à l'utilisateur, et une définition d'un marqueur d'arrêt propre à l'utilisateur,
- un état de charge (133) d'au moins un composant de réseau (127) est détecté par le moyen de commande de service (121), dans lequel le au moins un composant de réseau (127) est utilisable pour le service spécial en fonction de l'état de charge (133) du au moins un composant de réseau (127),
- une opération de commande de charge est exécutée par le moyen de commande de service (121) de manière appropriée de façon à modifier la charge du au moins un composant de réseau (127) en fonction de l'état de charge détecté, dans lequel l'opération de commande de charge destinée à modifier l'état de charge du au moins un composant de réseau (127) comprend une génération d'un message de commande de charge (129) et une transmission du message de commande de charge (129) du moyen de commande de service (121) au premier équipement d'utilisateur (117), et
- le service spécial est fourni, dans lequel le au moins un composant de réseau (127) est utilisé pour fournir le service spécial.

21. Le système selon la revendication 20 comprenant en outre un moyen (RACF) de gestion de la bande passante qui est conçu de façon à acquérir des connaissances concernant l'état de charge du au moins un composant de réseau (127) et de façon à exercer une influence sur l'état de charge du au moins un composant de réseau (127).

22. Le système selon la revendication 21, dans lequel l'exercice d'une influence sur l'état de charge du au moins un composant de réseau (127) est exécuté par la fourniture d'informations de charge au moyen de commande de service (121).

23. Le système selon la revendication 21 ou 22, dans lequel l'exercice d'une influence sur l'état de charge du au moins un composant de réseau (127) est exécuté par la fourniture d'informations au premier équipement d'utilisateur (117).

24. Le système selon l'une quelconque des revendications 21 à 23, dans lequel l'exercice d'une influence sur le au moins un composant de réseau (127) est exécuté par la fourniture d'informations au au moins un composant de réseau (127).

25. Le système selon l'une quelconque des revendications 21 à 24, dans lequel le moyen (RACF) de gestion de la bande passante est inclus dans le moyen de commande de service (121).
